# EUROPÄISCHE PATENTSCHRIFT

(11) **EP 3 117 135 B1**
(45) Veröffentlichungstag und Bekanntmachung des Hinweises auf die Patenterteilung: **20.12.2017**
(21) Anmeldenummer: 15718764.2
(22) Anmeldetag: 13.03.2015
(51) Int. Cl.: B32B 7/12, B32B 15/08, B32B 27/10, B32B 27/32, B65D 81/38, F16L 59/065, B32B 15/20, F25D 23/06

(54) **VAKUUMISOLATIONSPANEEL UND BEHÄLTER MIT VAKUUMISOLATIONSPANEELEN**
VACUUM INSULATION PANEL AND CONTAINER COMPRISING VACUUM INSULATION PANELS
PANNEAU ISOLANT SOUS VIDE ET CONTENANT ÉQUIPÉ DE PANNEAUX ISOLANTS SOUS VIDE

(30) Priorität: 13.03.2014 DE 202014002192 U
(43) Veröffentlichungstag der Anmeldung: 18.01.2017
(73) Patentinhaber: va-Q-tec AG, 97080 Würzburg (DE)
(72) Erfinder: CAPS, Roland, 63839 Kleinwallstadt (DE)
(74) Vertreter: Von Rohr Patentanwälte Partnerschaft mbB
(86) Internationale Anmeldenummer: PCT/EP2015/000554
(87) Internationale Veröffentlichungsnummer: WO 2015/135656

(56) Entgegenhaltungen:
- EP-A2- 0 481 730
- WO-A1-2006/024937
- US-A- 4 662 521
- US-A- 5 262 375

## Beschreibung

Die Erfindung betrifft ein Vakuumisolationspaneel mit den Merkmalen des Oberbegriffs von Anspruch 1 sowie einen Behälter mit Vakuumisolationspaneelen gemäß dem Oberbegriff von Anspruch 11.

Vakuumisolationspaneele dienen der leistungsfähigen Isolierung von Kühl- und Gefriergeräten, der Isolierung von Transportbehältern für temperatursensitive Güter, zur nachträglichen Dämmung in der Gebäudesanierung etc. Ein Vakuumisolationspaneel hat grundsätzlich einen flächigen Kern aus offenporigem Material und eine den Kern an allen Seiten eng, vollständig und gasdicht umschließende Umhüllung. Dadurch ist es möglich, den Raum innerhalb der Umhüllung zu evakuieren und dadurch die Wärmeleitfähigkeit des Vakuumisolationspaneels auf sehr niedrige Werte zu bringen.

Ausgangspunkt für die Lehre der vorliegenden Erfindung ist ein bekanntes Vakuumisolationspaneel (DE 10 2010 019 074 A1), bei dem die Umhüllung mindestens eine gasdichte Barriereschicht und innenseitig an der Barriereschicht eine Siegelschicht aufweist. Dieses Vakuumisolationspaneel umfasst einen flächigen Kern aus einem offenporigen Material, eine erste, an einer ersten Hauptfläche des Kerns großflächig anliegende Barrierefolie mit wenigstens einer dem Kern zugewandten Siegelschicht, eine zweite, den Kern an dessen anderer Hauptfläche umgebende Barrierefolie ebenfalls mit einer Siegelschicht, sowie eine umlaufende Siegelnaht, entlang der die beiden Barrierefolien mit Hilfe der Siegelschichten durch thermisches Verschweißen aneinander gesiegelt sind.

Im Stand der Technik, von dem die Erfindung ausgeht, wir erläutert, dass sich für den Kern druckbelastbare Materialien in der Form von Pulverplatten, Pulversahüttungen, offenporigen Schäumen oder Glasfasermaterialien eignen. Insbesondere Dämmkerne aus Pulverplatten oder losem Pulver werden gewöhnlich noch zur Minderung der Staubbildung mit einem luftdurchlässigen Polyestervlies umhüllt, wie sich beispielsweise aus der DE 100 585 66 A1 ergibt. Damit wird verhindert, dass beim Evakuiervorgang in der Vakuumkammer Staub frei wird und sowohl die Siegelnähte als auch die Vakuumkammer verschmutzen.

Bei einem anderen bekannten Vakuumisolationspaneel (US 4,662,521 A) befindet sich unmittelbar am Kern, also innerhalb der Barriereschichten, eine Papierschicht, gebildet von einem geschlossenen Papierbeutel, in dem sich das Mikropulver des Kernmaterials befindet. Die Steifigkeit der Umhüllung ist hier etwas höher als bei Verwendung eines luftdurchlässigen Polyestervlieses.

Kernplatten aus mikroporösem Kieselsäurepulver weisen eine sehr feine Porenstruktur auf und lassen relativ hohe Gasdrücke zu, ohne dass die Wärmeleitfähigkeit des Restgases eine Rolle spielt. So ist bei diesen mikroporösen Materialien nur ein Vakuum von 1 bis 10 mbar notwendig, um die Wärmeleitfähigkeit auf 0,004 bis 0,005 W/mK zu bringen. Umhüllungen aus speziellen Barrierefolien, die nur eine hauchdünne, aufgedampfte Beschichtung aus Aluminium aufweisen, stellen sicher, dass der Gasdruck im Kernmaterial nur mit etwa einem mbar pro Jahr ansteigt.

Allerdings bedingten die vorherigen Herstellungsprozesse von Vakuumisolationspaneelen mit Pulverfüllung einen relativ hohen Aufwand und lassen sich nicht vollständig automatisieren.

Ein Verfahren, das den Automatisierungsansprüchen relativ nahe kommt, wird in DE 10 2005 045 726 A1 mit den folgenden Verfahrensschritten beschrieben: Ein Pulver wird in einen Beutel aus Barrierefolie eingefüllt; ein luftdurchlässiges, aber für Pulverstaub undurchlässiges Filtermaterial wird in der Nähe der Öffnung an der Innenseite des Folienbeutels derart befestigt, dass das Beutelinnere staubdicht abgeschlossen ist, jedoch noch Luft austreten kann; der Innenraum wird evakuiert; und schließlich wird der Beutel im evakuierten Zustand verschlossen.

Das feine Pulver kann bei der Evakuierung im Beutel auch bei hohen Gasströmen durch das in der Beutelöffnung angebrachte Filtermaterial vollständig zurückgehalten werden, so dass der Evakuierraum und die Siegelnähte nicht verschmutzt werden. Allerdings hat das Verfahren den Nachteil, dass der Evakuiervorgang relativ lange dauert, da nur über die schmale, mit dem Filtervlies ausgestattet Öffnung mit relativ geringem Strömungsquerschnitt evakuiert werden kann. Außerdem wird durch das einseitige Absaugen eine eher ungleichmäßige Verteilung des Pulvers über der Paneelfläche erzeugt.

Bei dem erstgenannten bekannten Vakuumisolationspaneel erfolgt dagegen die Herstellung auf modifizierte Weise, nämlich dadurch, dass an einer zweiten, der ersten Barrierefolie gegenüberliegenden Hauptfläche des Kerns ein flächiges Filtermaterial großflächig anliegt, wobei die zweite Barrierefolie an der Außenseite des flächigen Filtermaterials großflächig anliegt, und wobei das Filtermaterial rundum in die Siegelnaht zwischen den beiden Barrierefolien eingeschweißt ist.

Indem das Filtermaterial nicht nur an einer Stirnfläche des Kerns anliegt, sondern an einer gesamten Hauptfläche desselben, kann die Evakuierung des über die gesamte Fläche des Filtervlies erfolgen, so dass eine wesentlich gleichmäßigere Verteilung des Pulvers über die Fläche gewährleistet wird, aber auch gezielt Strukturen in der Oberfläche, z. B. Stufen mit definierten Dicken eingebracht werden können.

Zur Herstellung eines derartigen Vakuumisolationspaneels kann das lose Pulver oder die Pulverplatte auf eine ersten Barrierefolie aufgebracht werden; darüber wird das Filtermaterial gelegt. Das Filtermaterial wird am Rand, der der späteren Flächenform des Vakuumisolationspaneels folgt, mit der ersten Barrierefolie verbunden, so dass für das Pulver ein abgeschlossenes Volumen entsteht, das aber trotzdem durchlässig für Luft ist und dank seiner großen Fläche ein erheblich schnelleres Evakuieren erlaubt als zuvor.

Im zuvor ausführlich erläuterten Stand der Technik werden verschiedene Maßnahmen zur Herstellung von Vakuumisolationspaneelen der in Rede stehenden Art beschrieben. Insbesondere wird auch erläutert, dass der flächige Kern nicht nur einteilig, sondern auch mehrteilig aufgebaut sein kann.

Umfangreiche Vorschläge werden für die Ausgestaltung der Umhüllung mit den Barrierefolien gemacht. Typische erreichbare Gasdurchlässigkeiten und Wasserdampfdurchlässigkeiten werden beschrieben und es werden Vorschläge für die Auswahl der Materialien für die Barriereschichten und die Siegelschichten gemacht.

Alle diesbezüglichen Aussagen im Stand der Technik sollen auch für die vorliegende Erfindung in entsprechender Weise Anwendung finden, soweit die nachfolgenden Ausführungen dem nicht ausdrücklich entgegenstehen. Somit wird für die diesbezüglichen Aussagen umfassend auf den Offenbarungsgehalt der DE 10 2010 019 074 A1 verwiesen.

Vakuumisolationspaneele der in Rede stehenden Art haben hervorragende Dämmeigenschaften und für vielfältige Anwendungen eine vollauf ausreichende Nutzungsdauer. Aufgrund der geringen Dicke der Umhüllung sind Vakuumisolationspaneele der in Rede stehenden Art in der Handhabung aber empfindlich. Man muss darauf achten, dass die Umhüllung des Vakuumisolationspaneels nicht beschädigt wird.

Beim Evakuieren des einteiligen oder mehrteiligen flächigen Kerns im Vakuumisolationspaneel führt der Luftdruck der Umgebungsatmosphäre gelegentlich dazu, dass die Umhüllung in den Kern ungleichmäßig hineingedrückt wird. Dadurch entstehen wellige Oberflächenstrukturen.

Der Erfindung liegt das Problem zugrunde, das bekannte, zuvor erläuterte Vakuumisolationspaneel so auszugestalten und weiterzubilden, dass es insgesamt stabiler ist.

Die zuvor aufgezeigte Problemstellung wird bei einem Vakuumisolationspaneel mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der auf das Vakuumisolationspaneel bezogenen Unteransprüche.

Gegenstand der Erfindung ist auch ein Behälter mit Boden, Seitenwänden und Decke gemäß Anspruch 11, der ganz oder zum Teil aus Vakuumisolationspaneelen gemäß der Erfindung aufgebaut ist.

Die Schichtfolge der Umhüllung des erfindungsgemäßen Vakuumisolationspaneels ist also relativ komplex. Von innen nach außen gibt es zunächst eine Siegelschicht aus Polyethylen, darüber eine Barriereschichtanordnung und darüber mindestens eine Papierschicht. Die Barriereschichtanordnung ist besonders spezifiziert dahingehend, dass sie mindestens eine metallisierte Polyesterfolie, EVOH-Folie, metallisierte EVOH-Folie, metallisierte PP-Folie, mit Aluminiumoxid oder mit Siliziumoxid beschichtete Kunststofffolie aufweist. Sie kann auch mehrere, auch unterschiedlich kombinierte Folienschichten aufweisen.

Nach besonders bevorzugter Lehre ist die Papierschicht auf der Außenseite ihrerseits durch eine Kunststoff-Außenschicht oder -Folie abgedeckt und geschützt. Besonders bevorzugt ist es, wenn die Kunststoff-Außenschicht als originäre Beschichtung der Papierschicht ausgeführt ist. Die Kunststoff-Außenschicht oder -Folie kann besonders bevorzugt aus Polyethylen bestehen.

Die Lehre der Erfindung ist besonders darauf gerichtet, dass die Umhüllung an der Außenseite der Barriereschicht mindestens eine Papierschicht aufweist, wobei die Papierschicht zumindest in einem großen, flächigen Teil der Umhüllung angeordnet ist. Die Umhüllung des erfindungsgemäßen Vakuumisolationspaneels hat dort, wo die Barriereschicht mit einer Papierschicht kombiniert ist, eine wesentlich höhere Steifigkeit als die Umhüllung bei bislang bekannten Vakuumisolationspaneelen. Dadurch ergibt sich eine geringere Empfindlichkeit gegen mechanische Beschädigungen. Außerdem ergibt sich eine glatte Oberfläche, da sich die durch die Papierschicht versteifte Umhüllung nicht so leicht in die Vertiefungen des flächigen Kerns hineindrücken lässt. Die Oberfläche des Vakuumisolationspaneels der Erfindung ist deutlich glatter als die Oberfläche bekannter Vakuumisolationspaneele.

Es hat sich in der Praxis gezeigt, dass es tatsächlich unter Anpassung der Herstellungsverfahren und Herstellungsvorrichtungen möglich ist, Vakuumisolationspaneele mit der neuartigen Umhüllung mit nur geringfügig höherem Aufwand als bekannte Vakuumisolationspaneele herzustellen. Ggf. müssen gewisse Anpassungen an den Vorrichtungen (längere Zeit und höhere Temperatur beim Verschweißen der Siegelschichten) vorgenommen werden. Insgesamt ist aber eine Herstellung wie bei bekannten, nicht papierverstärkten Vakuumisolationspaneelen möglich.

Bevorzugt ist es, wenn die Papierschicht ein Flächengewicht von 100 bis 500 g/m², vorzugsweise von 200 bis 300 g/m², aufweist. In diesem Fall erhöht sich die Dicke der Umhüllung dort, wo eine Papierschicht vorhanden ist, auf etwa 200 µm bis 500 µm, wo ohne solche Papierschicht bislang eine Dicke von maximal 100 µm auch bei einer mehrlagigen Umhüllung erreicht wurde.

Für die Handhabbarkeit des Vakuumisolationspaneels sind die Hauptflächen des einteiligen oder mehrteiligen flächigen Kerns und seiner Umhüllung besonders wichtig. Demzufolge empfiehlt es sich, dass die Papierschicht zumindest auf einer der Hauptflächen vorgesehen ist. Bevorzugt ist die Papierschicht auf beiden einander gegenüberliegenden Hauptflächen der Umhüllung vorgesehen. Ganz besonders bevorzugt ist die Papierschicht überall in der Umhüllung vorgesehen.

Für die Herstellung des erfindungsgemäßen Vakuumisolationspaneels bieten sich die Verfahrensweisen an, die auch im Stand der Technik beschrieben worden sind. Nach einer ersten Variante ist dann ein Vakuumisolationspaneel so gestaltet, dass die Umhüllung aus zwei flächigen Umhüllungsteilen besteht, die mit ihren Siegelschichten randseitig umlaufend aneinandergelegt und miteinander durch Siegelung gasdicht verbunden sind.

In einer anderen Variante kann man das Vakuumisolationspaneel gemäß der Erfindung so gestalten, dass die Umhüllung aus einem einzigen flächigen Umhüllungsteil besteht, der an einer über eine Hauptfläche oder parallel zu einer Hauptfläche verlaufenden Siegelnaht endseitig gasdicht verbunden und an je einer oberen und unteren, im Wesentlichen quer zur ersten Siegelnaht verlaufenden Siegelnaht gasdicht verschlossen ist.

Für eine gute Herstellbarkeit des Vakuumisolationspaneels empfiehlt sich eine Vorbereitung der Umhüllung dergestalt, dass die Umhüllung, jedenfalls in den Papierschichten, mit vorgeprägten Vertiefungen, Prägungen o. dgl. an den vorgesehenen Faltlinien versehen ist.

Die hohe Steifigkeit, die hohe mechanische Widerstandsfähigkeit und die glatten Oberflächen von erfindungsgemäßen Vakuumisolationspaneelen ermöglichen es sogar, die Vakuumisolationspaneele als tragende Strukturen für Behälter o. dgl. zu verwenden. Das ist Gegenstand des Anspruchs 11. Die erfindungsgemäßen Vakuumisolationspaneele können selbsttragende Elemente und Behälter der in Rede stehenden Art, beispielsweise auch Kühl- oder Gefrierschränken, werden.

Im Folgenden wird die Erfindung nun anhand einer lediglich bevorzugte Ausführungsbeispiele darstellenden Zeichnung näher erläutert. In der Zeichnung zeigt.
- Fig. 1: in einer schematischen Schnittdarstellung die Lagen eines erfindungsgemäßen Vakuumisolationspaneels in einer Art Sprengdarstellung,
- Fig. 2 a-c: drei Darstellungen zur Herstellung eines bevorzugten Ausführungsbeispiels eines erfindungsgemäßen Vakuumisolationspaneels und
- Fig. 3 a-d: vier Darstellungen zur Herstellung eines weiteren Ausführungsbeispiels eines erfindungsgemäßen Vakuumisolationspaneels,
- Fig. 4: in schematischer Darstellung einen Behälter, aufgebaut aus Vakuumisolationspaneelen gemäß der Erfindung.

Die nachfolgende Erläuterung von Ausführungsbeispielen erfindungsgemäßer Vakuumisolationspaneele ist beispielhaft zu verstehen. Bevorzugte Ausgestaltungen und Weiterbildungen, die für ein Ausführungsbeispiel erläutert werden, können im Grundsatz bei allen Ausführungsbeispielen Anwendung finden.

Insbesondere sind auch die aus dem Stand der Technik bekannten Modifikationen von Kern und Umhüllung der Vakuumisolationspaneele, die einleitend in der vorliegenden Beschreibung angesprochen worden sind, für die erfindungsgemäßen Vakuumisolationspaneele anwendbar.

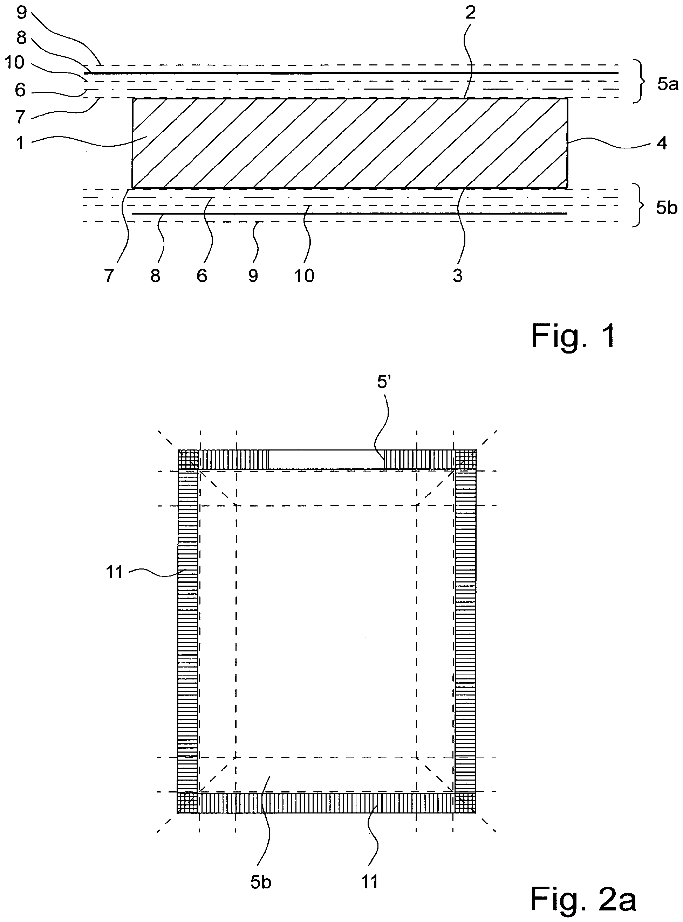

Fig. 1 zeigt die Grundstruktur eines erfindungsgemäßen Vakuumisolationspaneels. Die Gestalt des fertigen Vakuumisolationspaneels wird bestimmt zunächst durch die Gestalt seines flächigen Kerns 1. Dieser Kern 1 kann, wie dargestellt, einteilig ausgeführt sein. Er kann aber auch mehrteilig ausgeführt sein, also aus mehreren miteinander zusammengesetzten, ggf. auch nur einfach übereinander gelegten Teilen bestehen.

Der Kern 1 besteht aus einem porösen Material, beispielsweise aus pyrogener Kieselsäure, Fällungskieselsäure, Perlitpulver, Microsilica, Silica aus der Verwertung pflanzlicher Abfälle, mineralischen Pulvern oder organischen Pulvermaterialien oder deren Mischungen. Der Kern 1 ist aus einem solchen Pulver geformt, insbesondere durch Pressen. Er kann dabei entweder entsprechend vorgeformt sein, beispielsweise zu einer Platte gepresst und/oder ausgeschnitten oder ausgestanzt, oder er erhält erst während des erfindungsgemäßen Herstellungsverfahrens aus dem zunächst losen Pulver seine endgültige Gestalt. Für die folgende Erläuterung der Grundstruktur soll der Kern 1 als gegeben angesehen werden.

Im Übrigen muss der Kern 1 weder quader- noch plattenförmig sein, sondern kann eine weitgehend beliebige Form aufweisen, beispielsweise gewölbt. Oder er könnte unterschiedliche Dicken in verschiedenen Bereichen aufweisen. Auch Aus- oder Einschnitte und Durchbrechungen sind möglich und in seiner Oberfläche könnten Strukturen eingeprägt sein, beispielsweise Rillen o. dgl.

Im Folgenden soll der Einfachheit davon ausgegangen werden, dass der Kern 1 eine flächige Gestalt aufweist mit einer rechteckigen Grundfläche.

Der Kern 1 wird berandet durch zwei einander gegenüber liegende, vorzugsweise zueinander parallele Hauptflächen 2, 3 sowie zwischen diesen Hauptflächen 2, 3 verlaufende Umfangsflächen 4, beispielsweise bestehend aus vier Stirnseiten.

Bei der vereinfachten Darstellung in Fig. 1 sind die beiden Hauptflächen 2, 3 deckungsgleich, und je zwei einander gegenüber liegende Stirnseiten sind ebenfalls parallel zueinander, gleich groß und verlaufen jeweils lotrecht zu den Hauptflächen 2, 3. Damit hat der Kern 1 hier eine konstante Dicke.

Im fertigen Zustand ist der flächige, einteilige oder mehrteilige Kern 1 des Vakuumisolationspaneels an allen Seiten eng, vollständig und gasdicht umschlossen von einer Umhüllung 5. Die Umhüllung 5 ist gasdicht, damit das Vakuum in dem umschlossenen Raum über viele Jahre hinweg aufrechterhalten bleibt. Auf die Ausführungen in der Beschreibungseinleitung darf auch an dieser Stelle ausdrücklich hingewiesen werden. Sie gelten auch für die vorliegende Darstellung.

Wie Fig. 1 schematisch zeigt, weist die Umhüllung 5 zunächst mindestens eine gasdichte Barriereschicht 6 und innenseitig an der Barriereschicht 6 eine Siegelschicht 7 auf. Die Barriereschicht 6 bzw. Barriereschichtanordnung 6 wird weiter unten im Einzelnen erläutert. Bei der Siegelschicht 7 handelt es sich beispielsweise um eine Polyethylenfolie. Auch das wird weiter unten noch im Einzelnen erläutert.

Typischerweise erfolgt das Verschließen der Umhüllung 5 mit Hilfe der Siegelschichten 7 durch thermisches Verschweißen des Kunststoffmaterials der Siegelschichten 7.

Fig. 1 lässt sich ferner entnehmen, dass entsprechend der Lehre der Erfindung nun die Umhüllung 5 an der Außenseite der Barriereschicht 6 ferner mindestens eine Papierschicht 8 aufweist. Die Papierschicht 8 ist zumindest in einem großen, flächigen Teil der Umhüllung 5 angeordnet. Die Papierschicht 8 hat zur Folge, dass die Umhüllung 5 in diesem Bereich steifer ist als im Stand der Technik und weniger empfindlich gegen mechanische Beanspruchung. Die Oberfläche im Bereich der Papierschicht 8 ist glatt, weil die größere Steifigkeit der Umhüllung 5 in diesem Bereich dazu führt, dass die Umhüllung 5 unter dem Atmosphärendruck nicht ohne Weiteres in kleinere Rillen oder Ritzen des Kerns 1 hineingedrückt wird.

Bevorzugt ist vorgesehen, dass die Papierschicht 8 ein Flächengewicht von 100 bis 500 g/m², vorzugsweise von 200 bis 300 g/m², aufweist.

Das in Fig. 1 dargestellte Ausführungsbeispiel zeigt schematisch oben die Umhüllung 5a mit einer seitlich über den Rand der ersten Hauptfläche 2 überstehenden Papierschicht 8. Demgegenüber zeigt die in Fig. 1 unten dargestellte Umhüllung 5b eine Papierschicht 8, die nur rechts und links bis zum Rand der zweiten Hauptfläche 3 des Kerns 1 reicht.

Generell gilt, dass vorzugsweise die Papierschicht 8 zumindest auf einer der Hauptflächen 2, 3, vorzugsweise auf beiden Hauptflächen 2, 3 und/oder vorzugsweise auch auf den Umfangsflächen 4, vorgesehen ist.

Die Umhüllung 5 kann, wie in Fig. 1 schematisch dargestellt, zwei voneinander getrennte Papierschichten 8 in zwei Umhüllungsteilen 5a, 5b aufweisen. Man kann aber auch mehrere Papierschichten 8 an verschiedenen Stellen der Umhüllung 5 anordnen, wenn man besondere Effekte erreichen möchte.

Fig. 1 zeigt den weiteren Aufbau des bevorzugten Ausführungsbeispiels eines erfindungsgemäßen Vakuumisolationspaneels. Hier ist ferner vorgesehen, dass die Umhüllung 5 an der Außenseite der Papierschicht 8 eine Außenschicht 9, vorzugsweise eine Polyolefin-Außenschicht, aufweist.

Ferner zeigt Fig. 1, dass im dargestellten und bevorzugten Ausführungsbeispiel die Umhüllung 5 zwischen der Barriereschicht 6 und der Papierschicht 8 eine Zwischenschicht 10, vorzugsweise eine Polyolefin-Zwischenschicht und/oder eine Kleberschicht, aufweist.

In dem in Fig. 1 dargestellten und insoweit besonders bevorzugten Ausführungsbeispiel sind die Polyolefin-Schichten vorzugsweise PE-Folien, dargestellt mit gestrichelten Linien. PE-Folien sind auch die Siegelschichten 7. Die Barriereschichten 6 sind dargestellt in strichpunktierten Linien. Die Papierschichten 8 sind in durchgezogenen Linien dargestellt.

Für die Barriereschichtanordnung 6 ist vorgesehen, dass diese aus einer oder mehreren Lagen nachfolgender Folien besteht: metallisierte Polyesterfolie, EVOH-Folie, metallisierte EVOH-Folie, metallisierte PP-Folie, mit Aluminiumoxid oder mit Siliziumoxid beschichtete Kunststofffolie.

In einer kompletten Ausführung wie in Fig. 1 gezeigt hat die Umhüllung 5 insgesamt eine Dicke zwischen ca. 200 µm und 500 µm, je nach gewählter Dicke der Papierschicht 8.

Für die Siegelschichten 7 kommen bevorzugt Polyethylenfolien in Frage. Insbesondere kann man vorsehen Siegelschichten 7 aus LDPE, HDPE evtl. aber auch aus PP oder EVOH. Zweckmäßigerweise wird, wie im Stand der Technik auch, die thermische Verschweißung mit den unmittelbar aufeinander liegenden Siegelschichten 7 realisiert.

Die Verbindung von Barriereschicht 6 und Papierschicht 8 erfolgt, wie zuvor angesprochen, durch eine Polyolefin-Zwischenschicht 10 oder auch durch eine Kleberschicht, beispielsweise durch einen PU-Kleber.

Man kann auch vorsehen, dass die Umhüllung 5, entweder direkt auf der Papierschicht 8 oder ganz auf der Außenseite, mit einem Brandschutzmittel beschichtet oder anderweitig ausgerüstet ist.

Der Einsatz von Filtermaterialien, insbesondere einem Filtervlies aus Polyester, Polyethylen, Papier oder Zellstoff, das auf der Innenseite der Umhüllung 5 angeordnet ist, ist in der Beschreibungseinleitung bereits erörtert worden. Hierzu darf für Einzelheiten auf den eingangs erläuterten Stand der Technik verwiesen werden, auf den hier zum Zwecke der Offenbarung in vollem Umfange Bezug genommen wird.

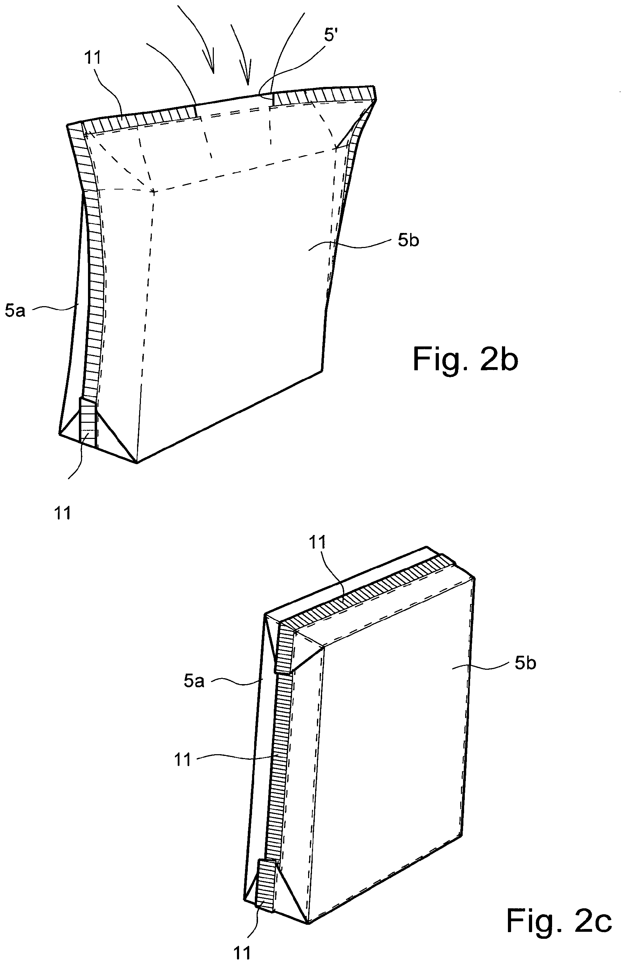

Fig. 2 zeigt eine bevorzugte Ausführungsform eines Vakuumisolationspaneels auf dem Wege seiner Herstellung. Hier ist vorgesehen, dass die Umhüllung 5 aus zwei flächigen Umhüllungsteilen 5a, 5b besteht, die mit ihren Siegelschichten 7 randseitig umlaufend aneinandergelegt und miteinander durch Siegelung gasdicht verbunden sind.

In Fig. 2a sieht man die flächig aufeinander gelegten Umhüllungen 5, die mit ihren Siegelschichten 7 aneinander unmittelbar thermisch verschweißt sind und umlaufende Siegelnähte 11 bilden. Ausgespart bleibt vorerst eine Einfüllöffnung 5' am oberen Rand der Umhüllung 5.

Fig. 2b zeigt den Füllvorgang (Pfeile) mit dem pulverförmigen Material für den Kern 1.

Anschließend wird das Innere der Umhüllung 5 evakuiert. Der Kern 1 und damit das gesamte Vakuumisolationspaneel erhält durch entsprechende Formgebung (evtl. Pressen) die in Fig. 2c dargestellte Form. Die Siegelnähte 11 sind umfangsseitig geschlossen.

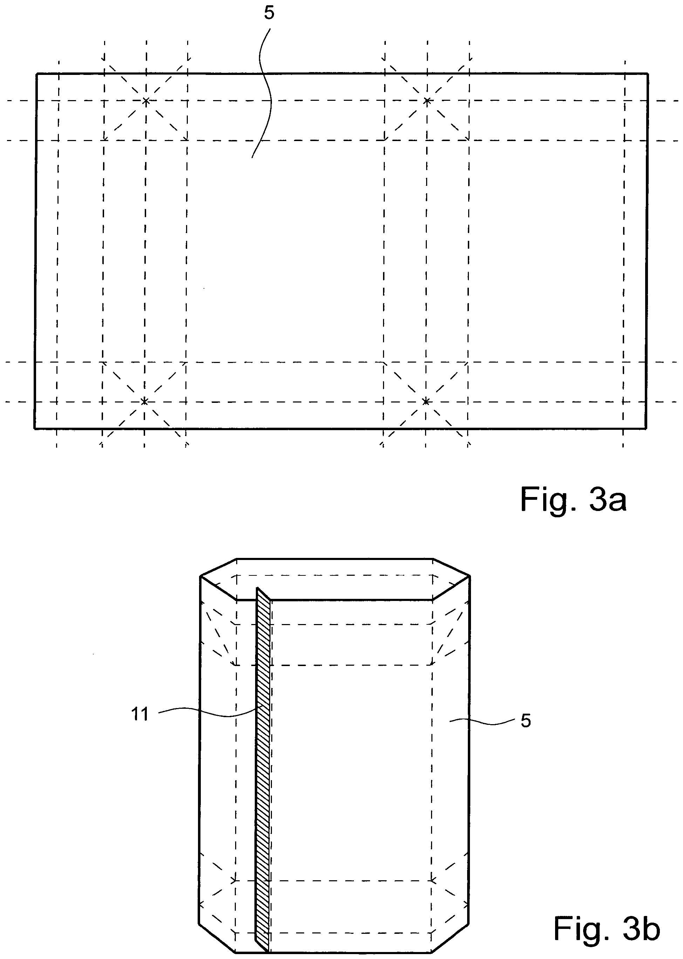

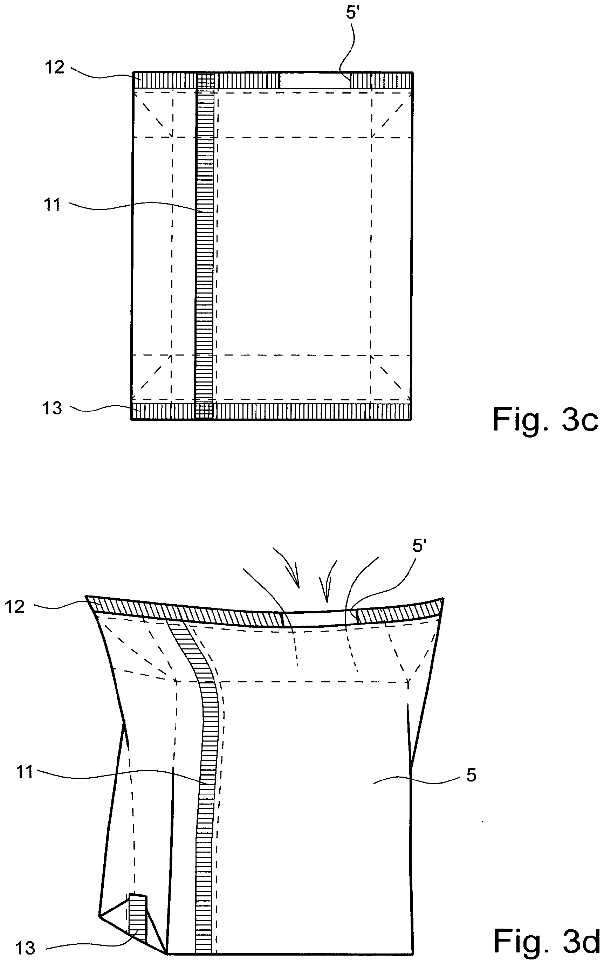

Fig. 3 zeigt in einer entsprechenden Darstellung wie Fig. 2 den Herstellungsweg eines Vakuumisolationspaneels, bei dem die Umhüllung 5 aus einem einzigen flächigen Umhüllungsteil besteht.

Die Umhüllung 5 besteht aus einem einzigen flächigen Umhüllungsteil, der an einer über eine Hauptfläche 2 verlaufenden ersten Siegelnaht 11 endseitig gasdicht verbunden und an je einer oberen und unteren, im Wesentlichen quer zur ersten Siegelnaht 11 verlaufenden Siegelnaht 12, 13 gasdicht verschlossen ist.

Es liegt auf der Hand, dass das Falten der Umhüllung 5 dort, wo gemäß der Erfindung Papierschichten 8 vorhanden sind, vorbereitet werden sollte. Demzufolge empfiehlt es sich, dass die Umhüllung 5 mit vorgeprägten Vertiefungen, Prägungen o. dgl. an den vorgesehenen Faltlinien jedenfalls dort versehen ist, wo sich in der Umhüllung 5 eine Papierschicht 8 befindet. Das ist in Fig. 2 und 3 durch gestrichelte Linien angedeutet.

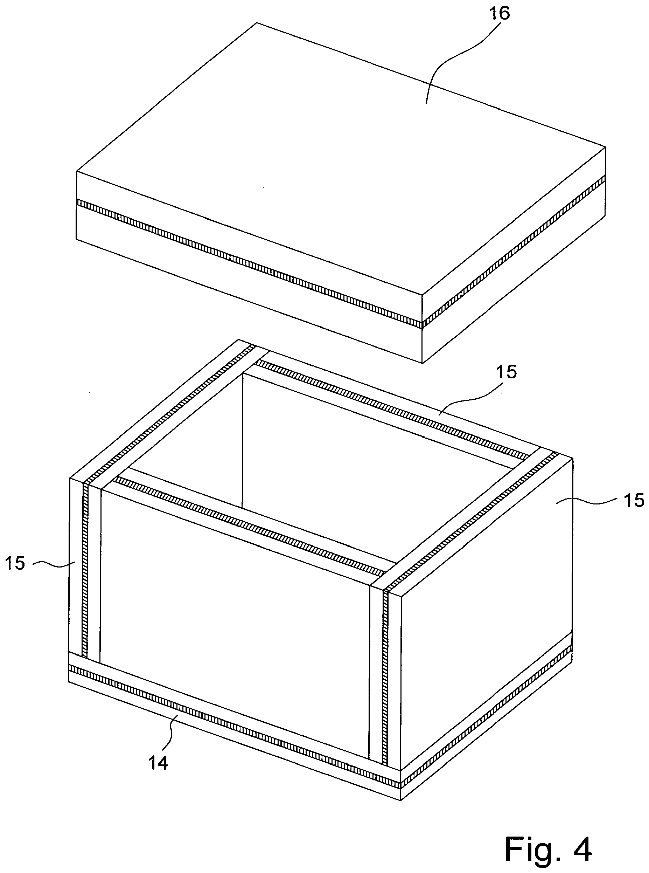

Fig. 4 zeigt schließlich die weiter bevorzugte Lehre der Erfindung in Form eines Behälters mit Boden 14, Seitenwänden 15 und Decke 16, wobei die Decke 16 als Deckel und/oder eine Seitenwand 15 als Tür öffenbar ist. Das besondere an diesem Behälter ist, dass der Boden 14 und/oder die Seitenwände 15 und/oder die Decke 16 aus einem oder mehreren Vakuumisolationspaneelen der zuvor beschriebenen Art besteht oder bestehen und, vorzugsweise, als tragende Elemente ausgeführt sind. Aufgrund der Widerstandsfähigkeit der erfindungsgemäßen Vakuumisolationspaneele können diese hier unmittelbar als Konstruktionselemente für den Behälter benutzt werden.

Was die Konstruktion entsprechender Behälter betrifft, so können diese mit Kühlakkus, beispielsweise aus phasenwechselndem Material, temperaturkontrolliert rein passiv genutzt werden. Man kann aber auch einen entsprechenden Behälter aktiv mit einem Kälteaggregat betreiben, alles wie aus dem Stand der Technik für sich bekannt.

Es hat sich gezeigt, dass mit dem erfindungsgemäßen Vakuumisolationspaneel vorzügliche Eigenschaften erreicht werden. Insbesondere kann man erreichen, dass die Permeation von Luft durch die Hülle bei Raumtemperatur weniger als 100 mbar liter pro m² Paneelfläche und Jahr, bevorzugt weniger als 10 mbar pro liter m² Paneelfläche und Jahr und besonders bevorzugt weniger als 2 mbar pro liter m² Paneelfläche und Jahr beträgt und/oder dass die Permeation von Wasserdampf durch die Hülle bei Raumtemperatur weniger als 100 g pro m² Paneelfläche und Jahr, bevorzugt weniger als 10 g pro m² Paneelfläche und Jahr und besonders bevorzugt weniger als 2 g pro m² Paneelfläche und Jahr beträgt.

## Patentansprüche

1. Vakuumisolationspaneel mit
einem flächigen Kern (1) aus offenporigem Material und
einer den Kern (1) an allen Seiten eng, vollständig und gasdicht umschließenden Umhüllung (5),
wobei die Umhüllung (5), von innen am Kern (1) nach außen aufgezählt, mindestens folgende Schichten aufweist:
eine Siegelschicht (7) aus Polyethylen, darüber
eine Barriereschichtanordnung (6) mit mindestens einer metallisierten Polyesterfolie, EVOH-Folie, metallisierten EVOH-Folie, metallisierten PP-Folie, mit Aluminiumoxid oder mit Siliziumoxid beschichteten Kunststofffolie, und darüber mindestens eine Papierschicht (8).

2. Vakuumisolationspaneel nach Anspruch 1, **dadurch gekennzeichnet,**
**dass** über der Papierschicht (8) mindestens eine Kunststoff-Außenschicht oder - folie (9) vorgesehen ist.

3. Vakuumisolationspaneel nach Anspruch 2, **dadurch gekennzeichnet,**
**dass** die Kunststoff-Außenschicht oder -folie (9) aus Polyethylen besteht.

4. Vakuumisolationspaneel nach Anspruch 2 oder 3, **dadurch gekennzeichnet,**
**dass** die Kunststoff-Außenschicht (9) als Beschichtung der Papierschicht (8) ausgeführt ist.

5. Vakuumisolationspaneel nach einem der Ansprüche 1 bis 4, **dadurch gekennzeichnet,**
**dass** die Papierschicht (8) ein Flächengewicht von 100 bis 500 g/m², vorzugsweise von 200 bis 300 g/m², aufweist.

6. Vakuumisolationspaneel nach einem der Ansprüche 1 bis 5,
wobei der Kern (1) und die Umhüllung (5) zwei einander gegenüber liegende, vorzugsweise zueinander parallele Hauptflächen (2, 3) sowie zwischen den Hauptflächen (2, 3) verlaufende Umfangsflächen (4) aufweist, **dadurch gekennzeichnet,**
**dass** eine Papierschicht (8) zumindest auf einer der Hauptflächen (2, 3), vorzugsweise auf beiden Hauptflächen (2, 3) und/oder vorzugsweise auch auf den Umfangsflächen (4), vorgesehen ist.

7. Vakuumisolationspaneel nach einem der vorhergehenden Ansprüche, **dadurch gekennzeichnet,**
**dass** die Umhüllung (5) zwischen der Barriereschichtanordnung (6) und der Papierschicht (8) eine Zwischenschicht (10), vorzugsweise eine Polyolefin-Zwischenschicht und/oder eine Kleberschicht, aufweist.

8. Vakuumisolationspaneel nach einem der vorhergehenden Ansprüche, **dadurch gekennzeichnet,**
**dass** die Umhüllung (5) aus zwei flächigen Umhüllungsteilen (5a, 5b) besteht, die mit ihren Siegelschichten (7) randseitig umlaufend aneinandergelegt und miteinander durch Siegelung gasdicht verbunden sind.

9. Vakuumisolationspaneel nach einem der Ansprüche 1 bis 7, **dadurch gekennzeichnet,**
**dass** die Umhüllung (5) aus einem einzigen flächigen Umhüllungsteil besteht, der an einer über eine Hauptfläche (2) oder parallel zu einer Hauptfläche (2) verlaufenden ersten Siegelnaht (11) endseitig gasdicht verbunden und an je einer oberen und unteren, im Wesentlichen quer zur ersten Siegelnaht (11) verlaufenden Siegelnaht (12, 13) gasdicht verschlossen ist.

10. Vakuumisolationspaneel nach einem der vorhergehenden Ansprüche, **dadurch gekennzeichnet,**
**dass** die Umhüllung (5) mit vorgeprägten Vertiefungen, Prägungen o. dgl. an den vorgesehenen Faltlinien jedenfalls dort versehen ist, wo sich in der Umhüllung (5) eine Papierschicht (8) befindet.

11. Behätter mit
Boden (14), Seitenwänden (15) und Decke (16), wobei die Decke (16) als Deckel und/oder eine Seitenwand (15) als Tür öffenbar ist,
**dadurch gekennzeichnet,**
**dass** der Boden (14) und/oder die Seitenwände (15) und/oder die Decke (16) aus einem oder mehreren Vakuumisolationspaneelen nach einem oder mehreren der Ansprüche 1 bis 10 besteht oder bestehen und, vorzugsweise, als tragende Elemente ausgeführt sind.

## Claims

1. Vacuum insulation panel comprising
a planar core (1) made of an open-pored material and an enclosure (5) that surrounds the core (1) on all sides in a close-fitting, complete and gas-tight manner,
wherein the enclosure (5), listed in order from the inside at the core (1) toward the outside, has at least the following layers:
a sealing layer (7) made of polyethylene, over that a barrier layer assembly (6) having at least one metalized polyester film, EVOH film, metalized EVOH film, metalized PP film, plastic film coated with alumina or with silicon oxide, and at least one paper layer (8) over said assembly.

2. Vacuum insulation panel according to Claim 1, **characterized in that**
at least one plastic outer layer or film (9) is provided over the paper layer (8).

3. Vacuum insulation panel according to Claim 2, **characterized in that**
the plastic outer layer or film (9) consists of polyethylene.

4. Vacuum insulation panel according to Claim 2 or 3, **characterized in that**
the plastic outer layer (9) is implemented as a coating of the paper layer (8).

5. Vacuum insulation panel according to one of Claims 1 to 4, **characterized in that**
the paper layer (8) has a grammage of 100 to 500 g/m², preferably of 200 to 300 g/m².

6. Vacuum insulation panel according to one of Claims 1 to 5,
the core (1) and the enclosure (5) having two mutually opposite, preferably mutually parallel, main surfaces (2, 3) and circumferential surfaces (4) running between the main surfaces (2, 3), **characterized in that**
a paper layer (8) is provided at least on one of the main surfaces (2, 3), preferably on both main surfaces (2, 3) and/or preferably also on the circumferential surfaces (4).

7. Vacuum insulation panel according to one of the preceding claims, **characterized in that**
the enclosure (5) has an intermediate layer (10), preferably a polyolefin intermediate layer and/or an adhesive layer, between the barrier layer assembly (6) and the paper layer (8).

8. Vacuum insulation panel according to one of the preceding claims, **characterized in that**
the enclosure (5) consists of two planar enclosure parts (5a, 5b), which are laid on each other with their sealing layers (7) running around at the edge and are connected to each other in a gas-tight manner by sealing.

9. Vacuum insulation panel according to one of Claims 1 to 7, **characterized in that**
the enclosure (5) consists of a single planar enclosure part which is connected in a gas-tight manner at one end to a first sealing seam (11) running over a main surface (2) or parallel to a main surface (2) and is closed in a gas-tight manner at an upper and lower sealing seam (12, 13) respectively running substantially transversely with respect to the first sealing seam (11).

10. Vacuum insulation panel according to one of the preceding Claims, **characterized in that**
the enclosure (5) is provided with pre-impressed depressions, embossing or the like at the envisaged fold lines, in any case where there is a paper layer (8) in the enclosure (5).

11. Container having
a base (14), sidewalls (15) and cover (16), the cover (16) being openable as a lid and/or a side wall (15) being openable as a door,
**characterized in that**
the base (14) and/or the side walls (15) and/or the cover (16) comprises or comprise one or more vacuum insulation panels according to one or more of Claims 1 to 10 and, preferably, are implemented as load-bearing elements.

## Revendications

1. Panneau isolant sous vide avec un noyau plat (1) en matériau poreux et une enveloppe (5) entourant le noyau (1) sur tous les côtés de façon étroite, complète et étanche au gaz,
dans lequel l'enveloppe (5) présente au moins les couches suivantes, comptées de l'intérieur sur le noyau (1) vers l'extérieur:
une couche de scellage (7) en polyéthylène, par-dessus un agencement de couches de barrière (6) avec au moins une feuille de polyester métallisée, une feuille de EVOH, une feuille de EVOH métallisée, une feuille de PP métallisée, une feuille de matière plastique revêtue d'oxyde d'aluminium ou d'oxyde de silicium, et par-dessus
au moins une couche de papier (8).

2. Panneau isolant sous vide selon la revendication 1, **caractérisé en ce qu'**il est prévu au moins une couche ou une feuille extérieure en matière plastique (9) sur la couche de papier (8).

3. Panneau isolant sous vide selon la revendication 2, **caractérisé en ce que** la couche ou feuille extérieure en matière plastique (9) se compose de polyéthylène.

4. Panneau isolant sous vide selon la revendication 2 ou 3, **caractérisé en ce que** la couche extérieure en matière plastique (9) est réalisée en tant que revêtement de la couche de papier (8).

5. Panneau isolant sous vide selon l'une quelconque des revendications 1 à 4, **caractérisé en ce que** la couche de papier (8) présente un grammage de 100 à 500 g/m², de préférence de 200 à 300 g/m².

6. Panneau isolant sous vide selon l'une quelconque des revendications 1 à 5, dans lequel le noyau (1) et l'enveloppe (5) présentent deux faces principales (2, 3) opposées l'une à l'autre, de préférence parallèles l'une à l'autre, ainsi que des faces périphériques (4) situées entre les faces principales (2, 3), **caractérisé en ce qu'**il est prévu une couche de papier (8) au moins sur une de faces principales (2, 3), de préférence sur les deux faces principales (2, 3) et/ou de préférence aussi sur les faces périphériques (4).

7. Panneau isolant sous vide selon l'une quelconque des revendications précédentes, **caractérisé en ce que** l'enveloppe (5) présente entre l'agencement de couches de barrière (6) et la couche de papier (8) une couche intermédiaire (10), de préférence une couche intermédiaire de polyoléfine et/ou une couche de colle.

8. Panneau isolant sous vide selon l'une quelconque des revendications précédentes, **caractérisé en ce que** l'enveloppe (5) se compose de deux parties d'enveloppe plates (5a, 5b), qui sont appliquées l'une sur l'autre en bordure périphérique avec leurs couches de scellage (7) et assemblées l'une à l'autre de façon étanche au gaz par scellage.

9. Panneau isolant sous vide selon l'une quelconque des revendications 1 à 7, **caractérisé en ce que** l'enveloppe (5) se compose d'une seule partie d'enveloppe plate, qui est assemblée en extrémité de façon étanche au gaz à une première soudure (11) s'étendant sur une face principale (2) ou parallèlement à une face principale (2) et qui est fermée de façon étanche au gaz respectivement à une soudure supérieure et inférieure (12, 13) s'étendant essentiellement transversalement à la première soudure (11).

10. Panneau isolant sous vide selon l'une quelconque des revendications précédentes, **caractérisé en ce que** l'enveloppe (5) est dotée de creux, d'empreintes ou analogues réalisés au préalable sur les lignes de pliage prévues, en tout cas là où il se trouve une couche de papier (8) dans l'enveloppe (5).

11. Contenant avec un fond (14), des parois latérales (15) et un plafond (16), dans lequel le plafond (16) peut être ouvert en tant que couvercle et/ou une paroi latérale (15) peut être ouverte en tant que porte, **caractérisé en ce que** le fond (14) et/ou les parois latérales (15) et/ou le plafond (16) est/sont constitué(e)(s) par un ou plusieurs panneau(x) isolant (s) sous vide selon une ou plusieurs des revendications 1 à 10, et est/sont de préférence réalisé(e)(s) sous forme d'éléments porteurs.
